# EUROPEAN PATENT SPECIFICATION

(11) **EP 4 349 557 B1**
(45) Date of publication and mention of the grant of the patent: **25.11.2026**
(21) Application number: 23201543.8
(22) Date of filing: 04.10.2023
(51) Int. Cl.: B29B 7/76, B29C 67/24, B29C 45/58, B29C 45/77, B29C 45/78, B29B 7/72, G01B 7/00, G01B 5/00, G01B 7/16

(54) **SENSORIZED SPACER, RELATED MIXING HEAD AND RELATED APPARATUS**
SENSORISIERTER ABSTANDSHALTER, ZUGEHÖRIGER MISCHKOPF UND ZUGEHÖRIGE VORRICHTUNG
ESPACEUR À CAPTEUR, TÊTE DE MÉLANGE ASSOCIÉE ET APPAREIL ASSOCIÉ

(30) Priority: 07.10.2022 IT 202200020718
(43) Date of publication of application: 10.04.2024
(73) Proprietor: Afros S.p.A., 21042 Caronno Pertusella (VA) (IT)
(72) Inventor: VOLPATO, Marco, 21042 Caronno Pertusella (VA) (IT); CORTI, Maurizio, 22100 Como (IT); FINI, Fabio, 21042 Caronno Pertusella (VA) (IT)
(74) Representative: Botti & Ferrari S.p.A.

(56) References cited:
- US-A- 2 416 664
- US-A- 4 251 918
- US-A1- 2019 265 016
- US-A1- 2020 307 024
- US-A1- 2021 001 525

## Description

### Field of application

The present invention concerns a sensorized spacer for high pressure mixing head.

The present invention concerns a related mixing and dosing head and to a related apparatus.

In particular, the present invention is mainly addressed to mixing heads for injection or casting reaction molding generally used in the context of reaction molding systems by means of thermosetting or expanding reactive resins.

### Prior art

In the present technical field, an established configuration of mixing heads is the L-shaped one, and a head body, in which a mixing chamber and a supply duct are perpendicularly arranged, is generally provided therein.

A cylindrical chamber entirely inside a supply tube, or a cylindrical chamber obtained as a joint between a cylindrical chamber formed in the head body with a cylindrical chamber entirely inside a supply tube, is provided.

A valve element, or mixing box, equipped with longitudinal slots and which is controlled to slide within the mixing chamber by a hydraulic piston head, slides in the mixing chamber.

Two or more injectors, which the pressurized reactive resins come to, face on the mixing chamber.

The injectors' function is to transform the pressure energy into energy of the jets that exit therefrom.

When the mixing box is in the advanced position, namely the closed one, said jets are intercepted by the respective slots and the resins are channeled backwards toward the respective recirculation ducts, which pipes are connected to, said pipes sending the resins toward the respective tanks.

When the mixing box is operated in the rear position, namely it is open, the two jets collide in the mixing chamber and the resulting turbulence causes the intimate and immediate mixing of the two or more reactive liquid components.

The mixed resins flow into the supply duct and therefrom toward the mold into which they are cast or injected.

The hydraulic control of the box is actuated through the cylinder of the mixing box.

The supply duct, or chamber, as stated, may be formed by a cylindrical bush inserted in the head body or by a bush connected to the lower part of the head body.

A so-called "tube" is provided, i.e. a hollow tubular body, the lower part of the supply duct being formed by this tube.

Normally the internal diameter of the supply duct is larger than that of the mixing chamber and this allows dampening the turbulence of the liquid coming out of the mixing chamber and flowing through the supply duct.

A cleaning organ called self-cleaning stem, actuated by a control device, slides inside the supply duct.

Said organ has the task of expelling the residues of reagent resins after the mixing box has been closed, so as to free all ducts of the head from the resins in the reaction phase to be ready for the subsequent mixing and dispensing.

The end part of the self-cleaning stem is made with a diameter coupled to the hole with a very reduced clearance, so as to scrape and expel as much resin as possible.

Said end part may have a limited length and be connected to the respective control head through a stem of a smaller diameter or the diameter may be of the same size throughout its own sliding length within the supply duct.

Instead, in the part that does not enter the supply duct, the self-cleaning stem is usually made of a larger diameter for reasons of mechanical robustness.

The self-cleaning stem scrapes and expels the resin in the reaction phase.

However, the clearance needed to be left toward the internal section of the supply duct allows a film of resin to be formed on the inner surface of said duct, film of resin which remains glued to the walls, and which, by reacting, hardens, and accumulates, being compressed with each passage of the self-cleaning stem.

This polymer film exerts a high gluing and friction effect upon the sliding of the stem with values from 10 up to 50 N/mm², which are comparable to those of a glue for industrial applications.

This friction effect causes a strong localized thermal increase resulting from the sliding force which can induce unacceptable expansions and deformations for a long and frequent use of the self-cleaning machine.

The concomitance of accumulation of reacted resin on the walls of the supply tube or duct, or chamber, of dispensing and of heating of the mutually sliding surfaces, as well as the differentiated expansion between supply tube or duct which has the possibility of dispersing heat in the head body block, and self-cleaning stem cause an increase in the sliding forces and wear of the surfaces in contact which, over time and in the sliding cycles, lead to an increase in the sliding forces and damage that may be related thereto.

Moreover, the movement of expulsion and subsequent reopening, i.e. retraction of the self-cleaning stem, transports parts of the resin film attached to the self-cleaning stem toward the control device of the self-cleaning stem.

To reduce the friction forces, the resulting expansions and distortions, the self-cleaning stem may be constructed with a scraping head controlled by a stem of reduced section. This configuration limits the direct relative sliding surfaces but allows the scraped reacted resin shavings to accumulate along the section between the reduced diameter stem and the supply duct itself until they saturate the space and then cause a compression effect of such accumulation which further tends to slow down the sliding of the self-cleaning stem.

These parts may accumulate within a designated space, i.e. within a spacer between head body and cylinder, or, in the absence of this space, they can be transported toward the seals that retain the control oil and can ruin the seals and pollute the oil and also allow it to escape out of the lower chamber of the cylinder.

Therefore, the function of said spacer is to create a space into which the longitudinal part of the self-cleaning stem wetted by the resin and dirty with reacted resin is transferred.

The spacer must have such a height as to avoid that this dirty part goes into contact with the tight seals that separate the opening chamber of the cylinder of the mixing box.

In the prior art, different types of spacers are provided, generally divided into spacers obtained integrally with the head body, spacers obtained integrally with the cylinder of the self-cleaning stem and spacers obtained separately and connected through screws both to the head body and to the cylinder of the self-cleaning stem.

Moreover, the spacers are often equipped with windows necessary for inspecting the self-cleaning stem and cleaning the inside of the spacer. Depending on the application, it is necessary to close the cavity of the spacer and circulate lubricating oil therein which removes heat and also part of the shavings of reacted material that can accumulate therein.

In the absence of ordinary maintenance, the reacted resin shavings can also fill the spacer with reacted resin to the point of causing the formation of a compact block if the accumulation of shavings is not removed in the periodic maintenance phase or by means of forced lubrication.

Document US 2021/001525 A1 generically discloses a high-pressure mixing, dosing and recirculation head for injection or casting reaction molding comprising a plurality of sensors and transducers installed on board the mixing, dosing and recirculation head to detect and transform representative physical quantities of at least one operational status.

US 2020/307024 A1 discloses a high-pressure mixing head with a removable, sensorized delivery duct, where deformation sensors are protected in a groove to monitor self-cleaning performance, enhance measurement reliability, and facilitate maintenance.

The technical problem underlying the present invention is to overcome the above mentioned drawbacks of the prior art.

Specifically, an object is to provide a device able to detect and measure the force transmitted between the self-cleaning stem and the supply duct in a correct and reliable manner.

An object of the invention is also to provide an interchangeable for detecting said force.

Moreover, an object of the invention is to provide a device for which it is possible to carry out a rapid, effective and with relative low frequency maintenance.

A further object of the invention is to provide a device suitable for containing and circulating lubricating liquid without this interfering with the measurement of the force transmitted by the spacer.

Finally, an object of the invention is to provide a device suitable for also being applied in pre-existing technologies.

### Summary

The solution idea underlying the present invention is to provide a device able to detect the force transmitted between self-cleaning stem and tube, or in general between self-cleaning stem and the walls of the supply duct, through the spacer in an accurate and reliable manner, to monitor the behaviour thereof and consequently verify the existence of those operating conditions that ensure optimal performance.

The above technical problem is solved by a spacer for high pressure mixing head comprising a control cylinder flange, a head body flange and a plurality of uprights adapted to interconnect the control cylinder flange and the head flange, at least one of said plurality of uprights comprising at least one deformation detection sensor applied at at least one available deformation surface thereof and adapted to detect longitudinal and/or transversal deformations of the at least one of the plurality of uprights.

The at least one of the plurality of uprights comprises at least one cavity in which the at least one deformation detection sensor is applied.

Preferably, the at least one cavity is made of at least one longitudinal hole according to a longitudinal axis X of at least one of said plurality of uprights.

Still more preferably, two holes that are symmetric with respect to a longitudinal transversal section according to the X axis of the at least one of the plurality of uprights may also be provided.

The deformation detection sensors applied inside said hole, more preferably inside two holes that are symmetric with respect to the longitudinal axis, detect the deformations repetitively and are protected.

Indeed, in the spacer during use, a continuously growing volume of reacted or reacting resin accumulates which, if not removed frequently, forms a very compact polymer block. The cleaning operations of these residues or of the compact block require the use of scrapers, tips, or other elongated tools which can easily damage the sensors applied to the outer surfaces.

Therefore, when the deformation detection sensors are applied into the cavity, preferably into the hole, and still more preferably to the walls of said hole, they are protected from any external mechanical action.

Still advantageously, the present solution allows directly measuring the force transferred to the self-cleaning stem through the supply tube by means of the spacer which is the mechanical part acting as a joint and transmitting the force exerted by the command of the self-cleaning stem onto the self-cleaning stem itself to the head body and thus to the supply tube or directly to the supply tube.

Alternatively, the available deformation surfaces comprise outer surfaces of the uprights and/or other perforation surfaces practiced in the uprights.

Preferably, the at least one deformation detection sensor comprises at least one extensometer.

Preferably, at least two extensometers connected in a half-bridge manner are used.

More preferably, at least four extensometers connected in a Wheatstone-bridge manner are used.

Advantageously, said choice allows having a broad detection of the deformations caused by the sliding and even in stationary conditions, relying on reduced measurement bases, carrying out automatic acquisitions and, finally, having reduced overall dimensions.

However, nothing prevents from using different types of sensors.

Preferably, the at least one extensometer is applied in longitudinal direction and/or in transversal direction with respect to longitudinal central axis of at least one of said plurality of uprights.

More preferably, the at least two extensometers are applied one in the longitudinal direction and the other one in the transversal direction with respect to a longitudinal central axis of at least one of said plurality of uprights.

Still more preferably, if four extensometers are present, two of them are applied in the longitudinal direction and the other two in the transversal direction with respect to a longitudinal central axis of at least one of said plurality of uprights, coinciding with that of the overall spacer, so as to form a complete Wheatstone bridge.

Advantageously, the present solution allows adopting the extensometer for determining the longitudinal deformations and/or the transversal ones generally connected to thermal variations.

Preferably, the adoption of a complete Wheatstone bridge configuration with two extensometers applied to detect the longitudinal deformation and two for the transversal deformation allow measuring and amplifying the force transmitted through the spacer as best as possible.

Preferably, the spacer comprises two uprights or three uprights or four uprights or six uprights.

Still more preferably, the uprights are arranged symmetrically with respect to a longitudinal central axis of at least one of said plurality of uprights, generally coinciding with that of the overall spacer.

Advantageously, said solution, still more preferably with multiple detection sensors applied on opposite uprights with respect to said axis, facilitates the reading of the compression deformation when the self-cleaning stem is retracted and of the traction deformation when it is, for instance, inserted to expel polyurethane residues and clean the tube and the surfaces of the dispensing duct, or chamber.

Preferably, the plurality of uprights comprise fillet end portions at the control cylinder flange and at the head flange.

Advantageously, said fillet end portions concentrate and direct the efforts toward a central elongated section which is therefore thinner than the connection areas with flanges and distribute these efforts without points of intensification toward these connection areas with the supply tube and/or with the head body.

More preferably, the at least one cavity is filled in with a hardening resin.

Advantageously, once the extensometers have been applied and bench tested, it is possible to fill in the hole and seal it with a protection and sealing resin which ensures to protect them from any possibility of accumulation of dirt or entry of corrosive or harmful liquids for the sensors.

Still more preferably, the spacer further comprises at least one duct departing from the at least one cavity, said at least one duct being adapted to contain at least one connection and power supply wire of the at least one deformation detection sensor. Preferably the at least one duct is also filled in with a hardening resin.

Advantageously, a connection toward the outside of the spacer is therefore obtained in less vulnerable points, preferably embedded in resin so that they also are adequately protected from damage.

Still preferably, the spacer further comprises thin sheets, having thickness between 1 mm and 6 mm, preferably between 2 mm and 5 mm, at inner surfaces of the plurality of uprights.

More preferably, said thin sheets comprise windows made with shaped raised edges.

The configuration of the spacer with the windows obtained with thin walls and framed edges allows having wide windows for dry cleaning but also affixing closing and sealing flanges to the windows and introducing lubricating liquids into the inner space of the spacer. This operation is done through flushing holes obtained on the closing flanges of the windows. The lubricating liquid is also adapted to inhibit the reaction of the reagent resins and to allow the removal of dirt through periodic flushing.

Preferably, the control cylinder flange is spaced from said head body flange by a distance L, and the at least one available deformation surface is provided within a region delimited by two axes each 2/5L away from a transversal centerline of the spacer itself in opposite directions.

Still preferably, the spacer further comprises fixing holes adapted to receive fixing screws at peripheral portions of the control cylinder flange and of the head body flange to removably couple the spacer to the head.

Advantageously, the two flanges thus connected make the spacer independent and thus removable from the head and replaceable.

Moreover, this allows easy dismantling to carry out periodic cleaning and maintenance and remove accumulated foam residue or to check that the seals or the self-cleaning stem are in good condition.

Furthermore, this allows the measurement carried out on the uprights not to be influenced by the force transmitted by the connection screws between the flanges and the related fixing surfaces.

Indeed, in case of fixing the spacer by through screws, which in some applications directly fix the cylinder to the head body using the spacer only as a means of interconnection of the two elements, the measurement of the deformations of said spacer would also be profoundly subject to the compression force generated by the passing screws.

According to another aspect of the present invention, a high pressure mixing head for injection or casting reaction molding is provided, said head being of the type comprising: a head body, a mixing chamber, obtained in the head body and in fluid communication with a supply duct, or chamber, at least partially defined by a cylindrical duct internal to a tube or made of a hole in the head body, joined to a second supply tube, a self-cleaning stem sliding in the supply duct, the self-cleaning stem being activated by a control device preferably hydraulic, and a spacer as above described, wherein the control cylinder flange is connectable to a control device and the head body flange is connectable to the head body or to the supply tube.

Advantageously, the present solution allows identifying the overall self-cleaning operating conditions of the head so as to determine whether or not optimal performance is achieved and to intervene in case of problems.

Moreover, as previously seen, advantageously, it is possible to always have perfect detection of these operating conditions, given that maintenance, generally by cleaning the spacer, or at most replacing the spacer inside the head is always possible quickly and effectively.

According to a further aspect of the present invention, an apparatus for injection or casting reaction molding comprising at least one high pressure mixing head according to what has been previously described and at least one mould are provided.

Advantageously, the present apparatus ensures optimally carrying out the molding operations with continuity, given that the head in which the mixing of the reagent resins takes place, and which carries out the related casting or injection always ensures the correct dispensing of the mixture and is not conditioned by functional degradations which, as mentioned, are prevented.

Further features and advantages will become clearer from the following detailed description of a preferred, but not exclusive, embodiment, of the spacer according to the present invention, with reference to the enclosed figures given by way of non-limiting example.

### Brief description of the drawings

In these drawings:
- Figure 1 shows a high pressure mixing head for reaction molding with a spacer according to the prior art with the spacer obtained integrally with the control device of the self-cleaning stem in section;
- Figure 2 shows another mixing head according to the prior art;
- Figure 3 shows a high pressure mixing head for reaction molding with a spacer according to the present invention;
- Figures 4A and 4B show a spacer according to the present invention with two trapezoidal section uprights open on two sides;
- Figures 5A and 5B show a spacer according to the present invention with two rectangular section uprights open on two sides;
- Figures 6, 7A, and 7B show the spacer of Figures 4A and 4B with two uprights having extensometers applied on the outer surface of at least one outer wall of the uprights;
- Figures 8, 9A, and 9B show a spacer of Figures 5A and 5B with two uprights having extensometers in a cavity or recess of an outer wall of the uprights;
- Figures 10A and 10B show exemplifying ways for mounting extensometers into a cavity;
- Figures 11A, 11B, and 11C show a spacer according to the present invention with two trapezoidal section uprights having windows delimited by rectangular section thin walls having a longitudinal hole for housing the deformation detection sensor;
- Figures 12A and 12B show a spacer according to the present invention comprising trapezoidal section uprights provided with longitudinal holes for housing the sensor and with thin walls on the inner faces of said uprights and closing flanges for the windows;
- Figures 13A and 13B show the configuration of an upright comprising reduced sections close to the longitudinal holes for housing the sensor and thin walls for transmitting the force and opening the windows according to the present invention with optimized shape in terms of sensitivity and calibration;
- Figures 14A and 14B show a spacer according to the present invention with closing plates for the windows constrained to only one of the flanges of the spacer so as not to transmit axial force.

In the different figures, analogous elements will be identified by analogous reference numbers.

### Detailed description

With the reference to the enclosed figure, reference numbers 1, 1', 1" globally and schematically indicate a spacer for high pressure mixing head according to the present invention, hereinafter indicated, for the sake of brevity, as spacer 1, 1', 1".

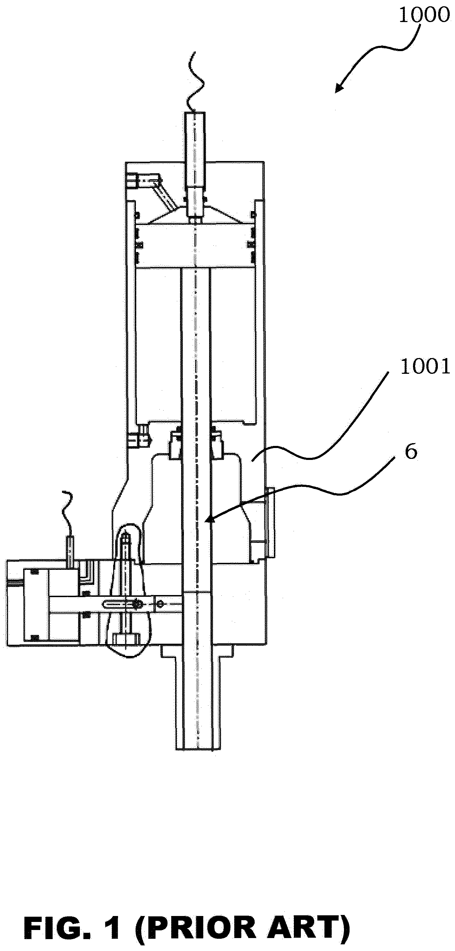

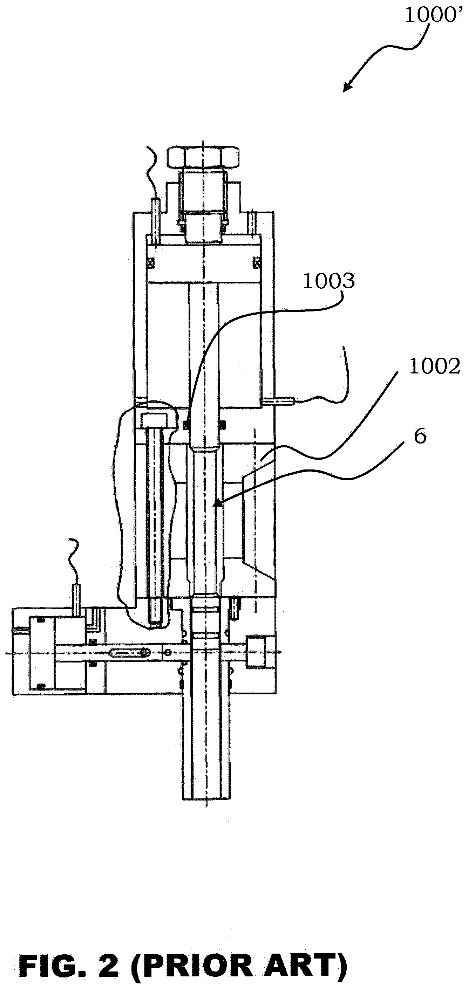

Figures 1 and 2 show "L-shaped" mixing and dosing heads 1000, 1000', or head 1000, 1000', made according to the prior art.

The head 1000, 1000' has a head body 2, a supply duct 3, defined by a cylindrical duct internal to a tube or made of a hole in the head body joined with the supply tube 3A, and a mixing chamber 4, with the section of the supply duct 3 larger in size than that of the mixing chamber 4.

Indeed, in the mixing chamber 4 it is necessary to have a narrow space for generating strong turbulence to promote efficient mixing of the reactive resins, whereas in the section of the supply duct 3 the turbulence is reduced until possibly a laminar or at least cohesive regime is obtained at the exit. This ensures efficient mixing by turbulence in the mixing chamber 4 and an optimal flow without splashes or spurts in the mold in which the head 1000, 1000' releases the mixture of reacting resins.

The reagent resins are introduced into the mixing chamber 4 through at least two injectors. A valve organ, or mixing box 5, equipped with longitudinal slots at each injector, is positioned and slides in the mixing chamber. When controlled to open and stops in the retracted position, the mixing box 5 frees the front of the injectors which introduce the jets of reactive resins into the mixing chamber 4.

When the mixing box 5 is controlled in the advanced or closing position, it expels the mixed reagent resins from the mixing chamber 4 while the injectors do not stop supplying the resins, but simply each of the reagent resins is not introduced into the mixing chamber 4 but into special recirculation slots obtained along the box parallel to the axis which separately divert the reactive resins coming out of the injectors backwards toward ducts which form a recirculation path toward the reactive resin supply tanks maintaining the resin flows separate.

When the mixing box 5 is in the open retracted position, the resin jets collide at high speed with each other or against the walls of the mixing chamber giving rise to the high turbulence which causes the intimate mixing.

The mixing box 5 is actuated by means of a control device, generally represented by a hydraulic control piston acting in a hydraulic control cylinder 5A.

In the supply duct 3 a self-cleaning stem 6, in particular a scraping portion 6A of the self-cleaning stem 6, which is controlled in sequence with the mixing box 5, operates with alternating movement; said scraping portion 6A being adapted to scrap and expel the mixture of reagent resins present inside the supply duct 3 toward the mould, every time the mixing box 5, by closing, interrupts the aforementioned injection of fluid from the injectors into the mixing chamber 4, the scraping portion is controlled to descend along the supply duct 3 and expels the reactive mixture starting from the section where it enters through the mixing chamber along the entire supply duct 3.

The self-cleaning stem 6 is actuated by means of a control device 7, also generally, but not limitedly, represented by a hydraulic control piston acting in a hydraulic control cylinder, which actuates the self-cleaning stem 6.

The prior art solutions of Figures 1 and 2 respectively provide for an integrally made spacer 1001 or a spacer 1002 with through screws to directly fix the cylinder to the head body, spacer generally inserted between the supply duct 3 and this control device 7.

The hydraulic control chamber of the self-cleaning stem 6 is longitudinally separated by the body 2 of the head 1000 by means of a seal holder bush, fitted at the base of the control device 7 at the spacer 1001 or separated with at least one seal 1003.

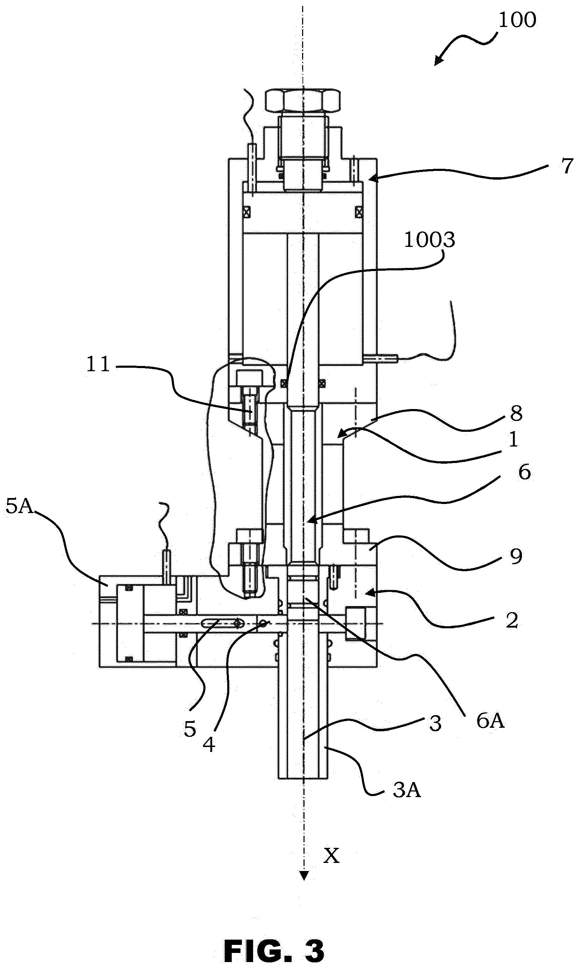

Figure 3 shows a mixing and dosing head 100, or head 100, according to the present invention, in which the spacer 1, 1', 1" according to the present invention is provided, said spacer being mountable and removable with respect to its seat, provided in the same position as in the prior art presented above.

The head 100 then has the same remaining features, which will be indicated with the same reference numbers above reported shown hereinafter.

The spacer 1, 1', 1" according to the present invention has a specific shape comprising a control cylinder flange 8, a head body flange 9 and a plurality of uprights 10, 10', 10", more visible in the following Figures, adapted to interconnect the control cylinder flange 8 and the head body flange 9.

The control cylinder flange 8 and the head body flange 9 generally have a quadrangular, circular, or elliptical section, but can also be triangular, and respectively have each a central hole 8A, 9A to access the inner chamber 40, 40', 40" of the spacer 1, 1', 1".

Generally the control cylinder flange 8 and the head body flange 9 are equal to each other, but nothing prevents from providing different conformations depending on any contingent needs.

Uprights 10, 10', 10" generally mean connection structures, without the term uprights indicating any specific conformation or any indication of specific structural loads.

The control cylinder flange 8 is connectable to the control device 7, generally a control cylinder, of the self-cleaning stem 6 and the head body flange 9 is connectable to the head body 2 or to the supply tube 3A.

In the present embodiment the connection occurs by means of fixing screws 11, preferably four fixing screws 11 mounted through fixing holes 11A on peripheral portions of the flange, and preferably on the four angles 12, 12', 12", preferably rounded, both of the control cylinder flange 8 and of the head body flange 9 when these are rectangular or square-shaped.

In this way the spacer 1, 1', 1" is independent and thus removable from the head 100 and replaceable, this easy dismantling also allows for periodic cleaning and maintenance.

Moreover, said solution, allows not to influence or invalidate the measurement carried out on the uprights 10, 10', 10" with the force transmitted by the fixing screws 11.

Indeed, in case of fixing the spacer with through fixing screws, which in some applications directly fix the control device 7 of the self-cleaning stem to the head body 2 or to the supply tube 3A passing through the spacer 1, 1', 1" and only using it as compression interconnection means of the two elements, the measurement would also be deeply subjected to the generated compressive force of the through fixing screws 11.

Moreover, the above fixing configuration of the spacer 1, 1', 1" allows dismantling one of the two described couplings and accessing the spacer 1, 1', 1" through the central hole 8A, 9A on the flanges 8, 9 to remove the accumulated foam residues, to control and maintain the seals 1003 or the self-cleaning stem 6 in good condition.

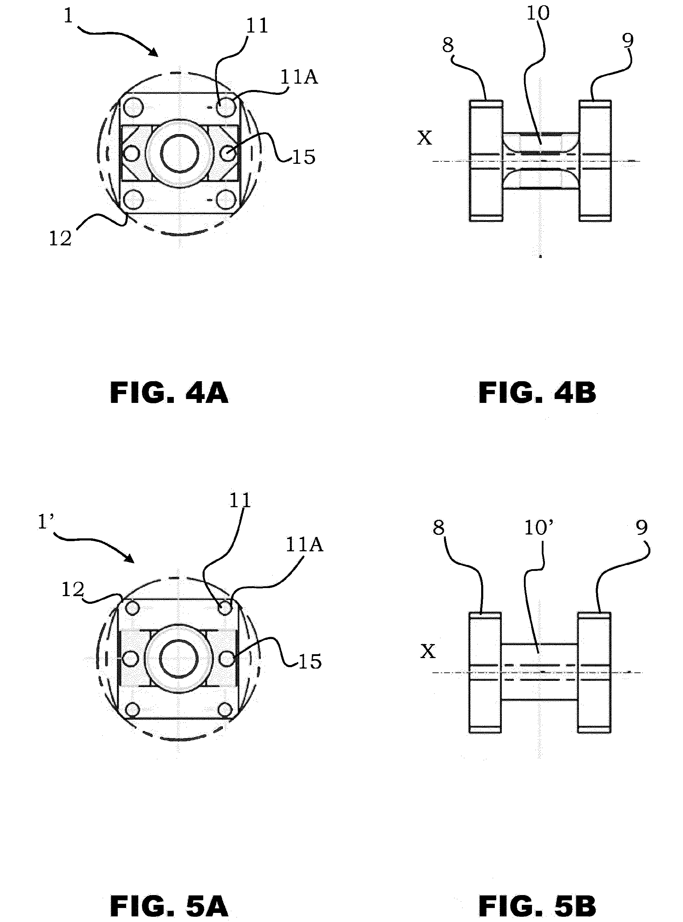

In the embodiments represented in Figures 4A to 13B two uprights 10, 10' with different cross sections are provided, but it is possible to adopt higher numbers of uprights 10, 10' generally even three, four uprights or six uprights.

Said uprights 10, 10', 10" are generally provided in the quantities indicated since a symmetric arrangement thereof with respect to a longitudinal central axis X of the spacer preferably corresponding with the axis of the self-cleaning stem is preferably provided.

However, nothing prevents from having a different number of uprights 10, 10', 10" including the possibility of an odd number of uprights 10, 10', 10" also depending on particular needs relating to the design of the specific mixing head.

Each upright 10, 10', 10" is provided with a central section 10A, 10A', 10A" with elongated constant section that may be compact or perforated connected to the control cylinder flange 8 and to the head body flange 9 at which it is preferable to glue the extensometers, or to the outer surfaces or inside the longitudinal drilling of at least one upright.

At the control cylinder flange 8 and at the head body flange 9 each upright 10, 10', 10" preferably has fillet end portions 10B, 10B', 10B" at the control cylinder flange 8 and at the head body flange 9.

Through said fillet end portions 10B, 10B', 10B" generally arched, the stresses are concentrated and directed toward the central thinned section 10A, 10A', 10A" and they distribute them avoiding stress concentration points toward the connection areas with the base of the control device 7 of the self-cleaning stem 6 and with the head body 2 or the supply tube 3A.

The uprights 10, 10', 10" further have specific narrow sections that optimize the longitudinal deformations parallel to the axis of the self-cleaning stem avoiding a concentration of stress such as to exceed the limits of permanent deformation or fatigue failure of the restricted sections themselves configurations studied by the Applicant by FEM analysis.

More specifically, the studied configurations of the uprights 10, 10', 10" cause the force exchanged between head body 2 or supply tube 3 and the base of the control device 7 of the self-cleaning stem to be mainly in the longitudinal direction, i.e. with tensile and/or compressive stresses, avoiding also having significant transversal and shear stresses in percentage terms.

Still more specifically, the ratio between axial stresses and tangential stresses is expected to be in the range 6-14%, preferably 8-11%.

Figures 4A and 4B particularly show a top view and a side view of a first embodiment of a spacer 1 according to the present invention with two uprights having a cross section with respect to the longitudinal axis X of the trapezoidal-shaped spacer 1. Said section may be a solid enbloc or hollow.

Figures 5A and 5B instead show a sectional top or plan view and a side view of a second embodiment of a spacer 1 according to the present invention, having a cross section with respect to the longitudinal axis X of the rectangular-shaped spacer 1. Said section may be a solid enbloc or hollow.

For both configurations the Applicant found out that, by the above mentioned analysis FEM, the desired stress distribution conditions were satisfied.

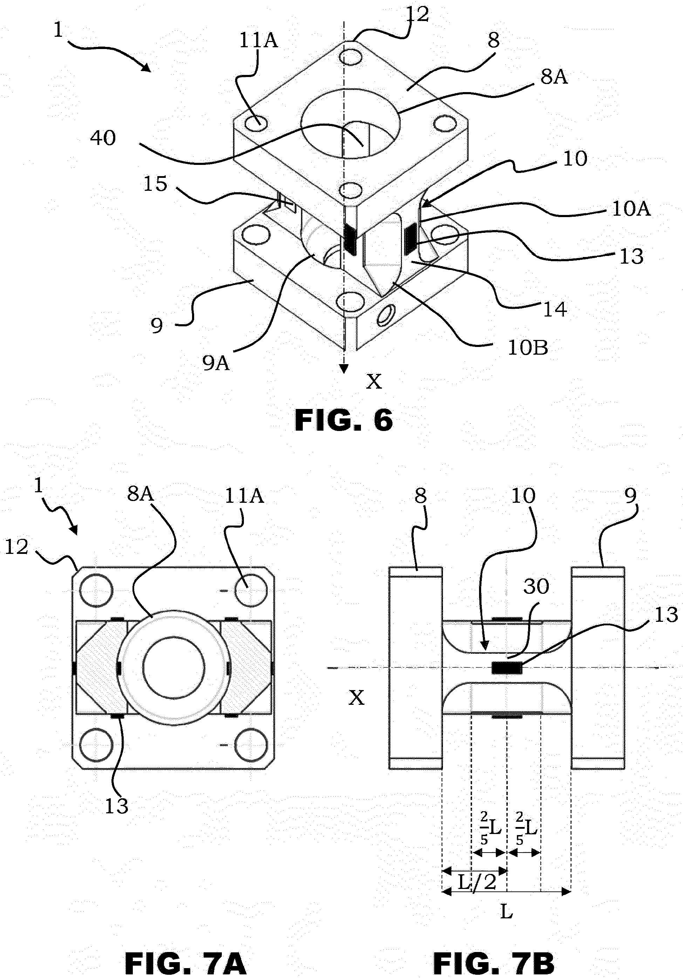

Figures 6, 7A, and 7B show the first embodiment with trapezoid section uprights more in detail.

According to the present invention, at least one longitudinal deformation detection sensor 13 applied at one of its surfaces of greatest deformation 14 of at least one upright 10, is provided.

In the present embodiment preferably the adopted type of sensors 13 are extensometers 13.

In the present embodiment there are at least two extensometers 13, one applied to detect the longitudinal deformation and the other one applied to detect the transversal one so as to also be able to detect the thermal deformation and compensate it electrically according to a two-extensometer Wheatstone bridge.

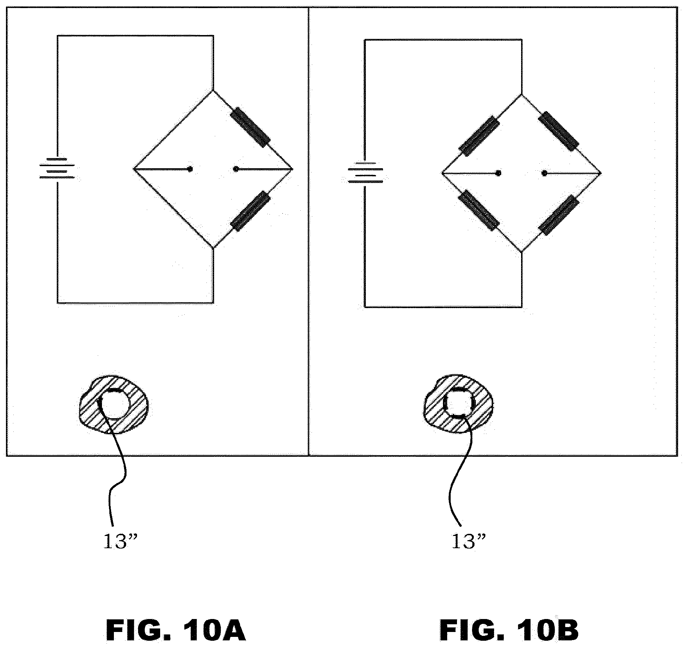

In the present embodiment, as visible in following Figures 10A, 10B, four extensometers 13 may be alternatively adopted, two of them applied to detect the longitudinal deformation and the other two to detect the transversal one, amplifying them more, both the longitudinal deformation and the thermal deformation in order to compensate for it electrically according to a four-extensometer Wheatstone bridge.

The extensometers 13, as indicated in Figure 7B, are preferably applied on the centerline L/2 of the distance L, defined as the distance between the surfaces facing toward the inside of the flanges 8 and 9.

In other variants, it is possible to apply the extensometers 13 on the uprights 10 ,10', 10" inside a region 30 close to said centerline, and more specifically, taking the centerline L/2 of the defined distance L as reference, a region delimited between an axis 2/5L (two/fifths of the distance L) distant from the centerline L/2 toward the inside of the flange 8 and an axis 2/5 L distant from the centerline L/2 toward the inside of the flange 9, as schematized in Figure 7B.

Should more uprights 10 be adopted, the extensometers 13 are preferably provided on uprights 10 opposite the longitudinal axis X of the spacer 1 to read the compression deformation thereof when the self-cleaning stem 6 is retracted and the traction compression when it is inserted to expel polyurethane residue and clean the dispensing cylinder 3.

Said deformations are then transduced through appropriate calibration into values of the corresponding traction and compression forces corresponding to the force transferred through the self-cleaning stem 6 which is slowed down by the force necessary for sliding in the supply duct due to the bonding and opposite tear resistance of the reacted resin residues that the self-cleaning stem 6 must detach, drag, and expel from the inner surface of the dispensing duct, or chamber.

The extensometers 13 may be applied to the available deformation surfaces of the uprights. In the embodiments herein described, the available deformation surfaces comprise the outer surfaces 14 of the uprights 10 or the surfaces recessed in appropriate recesses obtained on said outer surfaces 14, as well as the surfaces of the cavities or cylindrical longitudinal holes obtained in said uprights 10.

In the preferred embodiments, the extensometers 13 are applied onto the surface of cylindrical longitudinal holes 15, 15',15" obtained in the uprights 10.

Said holes 15, 15', 15" may be blind or through holes.

The holes 15, 15', 15" are the preferred but not limiting embodiment, in the present disclosure, in the available deformation surfaces to be equipped with extensometers.

In particular, the extensometers 13 are applied to the walls of said holes 15 at a narrow section 30 of the uprights 10 and oriented according to the longitudinal direction for detecting the main deformation and according to the transversal direction for detecting and compensating for the thermal deformations and suitably electrically connected according to the Wheatstone bridge diagrams.

Furthermore, nothing prevents from providing different types of specific cavities or recesses suitable for housing the extensometers 13.

Said extensometers 13, if directly arranged on the available deformation surfaces, may be alternatively protected by mechanical protection rigid covers applied to the surfaces themselves with glues, screws, or rivets and shaped as needed.

If applied, as shown, on the available deformation surfaces inside the holes 15, the extensometers 13 may be protected by filling the holes or the cavities or recesses with hardening resins or mastics.

In this way the extensometers may be protected from impacts or contacts or accumulation of dirt that could damage them.

In a variant, it is also possible to provide the extensometers 13 with related connection and supply wires, on the outer surfaces 14 of the uprights 10, without making said holes 15 or cavities.

Still furthermore, there are provided ducts (not shown) in the shape of holes or slots of reduced dimensions that depart from the hole 15, or in general from the provided cavity that houses the extensometers, said ducts being adapted to contain the connection and supply wires of the extensometers 13 and to take said connection and supply wires to points that are not very vulnerable to external mechanical actions or dirt.

The use of a cavity, in particular making the holes 15, allows obtaining a very effective mechanical and environmental protection of these sensors from any external mechanical action and also a very effective protection of said connection and supply wires.

The extensometers 13 are adapted to detect the deformations and thus the forces transmitted between the self-cleaning stem 6 and the head body 2 that fixes the supply tube 3A or directly to the supply tube 3A itself.

Indeed, the self-cleaning stem 7 is slowed down during the sliding in the supply duct 3 due to the bonding and the opposite tear resistance of the reacted resin residues that the self-cleaning stem 7 must detach, drag, and expel from the inner surface of the dispensing duct or chamber both during the expulsion stroke toward the exit of the duct and during the opening stroke to allow dispensing.

During the opening and closing strokes, a continuously growing volume of reacted resin accumulates in the spacer 1, during use or during the reaction phase, which, if not removed frequently, forms a very compact polymer block.

The cleaning operations of said residues or of the compact block require the use of scrapers, tips, or other elongated tools which can easily damage the sensors applied on the outer surfaces 14.

Furthermore, according to the present embodiment, once the extensometers 13 have been applied to the bench, the hole 15 is filled and sealed by a protection and sealing resin which ensures to protect the extensometers 13 from any possibility of accumulation of dirt or of entry of corrosive or harmful liquids.

Even the above ducts for the connection and supply wires of the extensometers 13 are preferably filled with a hardening resin. Generally, the same hardening resin is adopted.

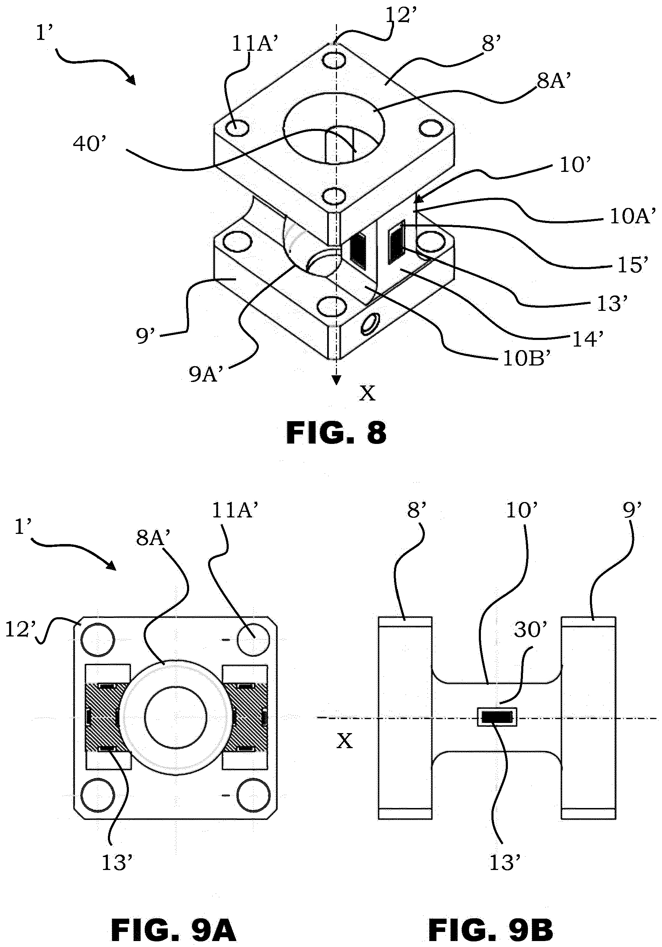

Figures 8, 9A, and 9B show a second embodiment of a spacer 1' with uprights 10' having rectangular cross section.

The preferential position of the extensometers 13' is the same as described in the previous embodiment.

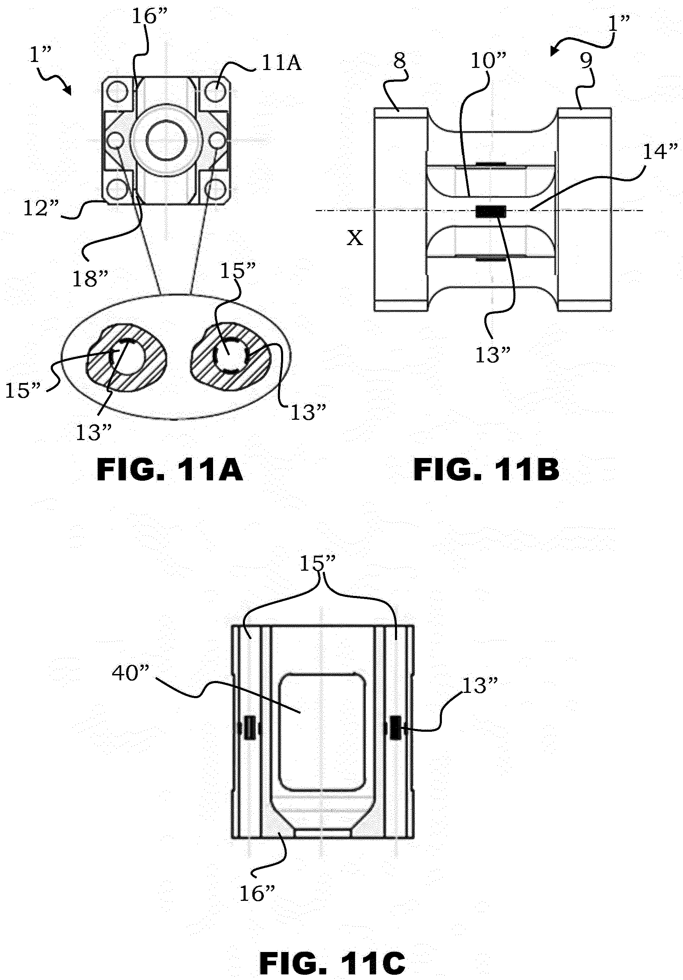

Even in this case there are extensometers 13' applied to the outer surfaces o in housing recesses or cavities 14' obtained on the available deformation surfaces, specifically in cavities of the outer surfaces 14, more specifically to the available surfaces of the holes 15', with the same features as the first embodiment, which confer the same advantages. A preferred embodiment provides for deformation sensors applied on the available deformation surfaces of holes inside the rectangular sections at a narrow section 30', as still shown in Figure 11C.

A further embodiment is shown in Figures 11A and 11B which show a spacer 1" having analogous features as the first embodiment with trapezoidal-section uprights 10" and with extensometers 13" that may be applied onto outer available deformation surfaces 14" or preferably applied onto inner available deformation surfaces of blind or through holes 15". Figure 11A in an enlargement further highlights the possible positioning of the extensometers 13" in the holes 15".

Furthermore, the spacer 1" comprises thin sheets 16" on the internal sides of said uprights 10", facing toward the internal chamber 40".

Thin sheets mean sheets with a thickness comprised between 1 mm and 6 mm, preferably between 2 mm and 5 mm.

In other words, walls of reduced thickness are provided, preferably integral with the uprights 10" which delimit the sides of the windows necessary to access the inside of the spacer, at the inner surfaces facing toward each other and toward the central hole 8A, 9A, said walls extending toward the edge of the spacer 1" defined by the peripheral portion of the flanges 8 and 9.

Nothing prevents from providing an analogous solution with rectangular section uprights of the second embodiment above described.

The parallel inner surfaces of said thin sheets 16" are filleted, by means of fillets 17", with corresponding edge surfaces 18" obtained on the flanges 8 and 9 to form windows with a rectangular shape and section adapted to house seal closures of the inner cavity of the spacer.

Figure 11C specifically show a sectional view of said spacer 1" passing through its longitudinal X axis, in which the development of the inner chamber 40" is visible, which is partially covered on the bottom of the shape of the rectangular window with filleted angles formed by the thin sheets 16" and by the lower and upper edges.

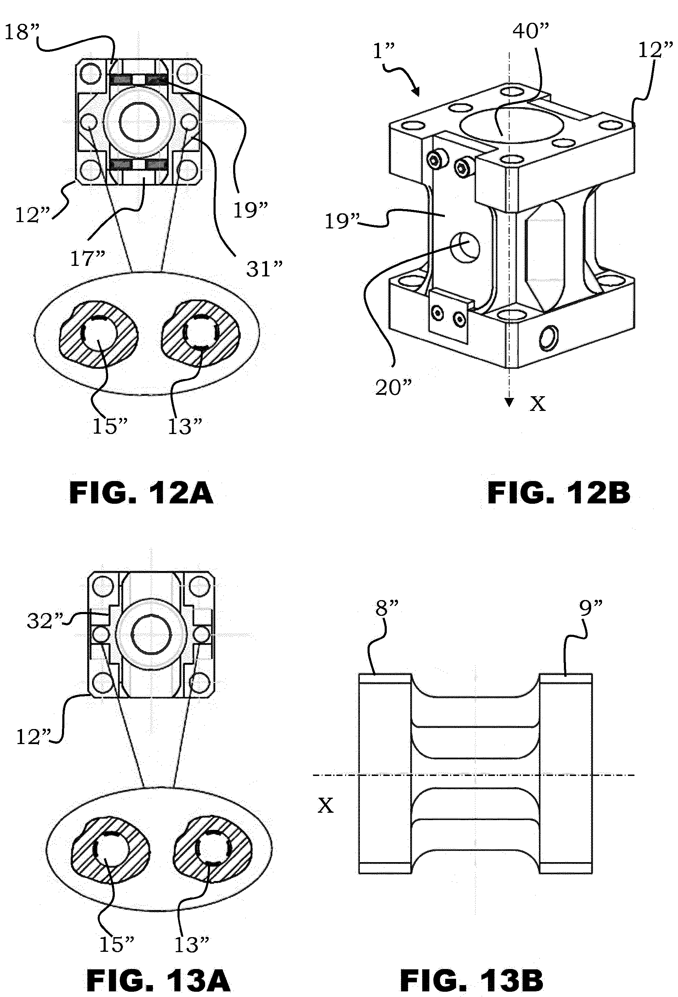

Said solution allows having wide windows for the dry cleaning but also to affix, as shown in Figures 12A-14B, closing flanges 19" for closing and tight sealing the windows and for supplying lubricating liquids into the inner space of the spacer 1".

In particular, this latter operation provides for making holes 20" on said closing flanges 19" for connecting the flushing pipes.

The lubricating liquid is also adapted to inhibit the reaction of the reagent resins and to allow removing the dirt through periodic flushing.

Figures 12A, 13A further highlight the possible positioning of the extensometers 13" in the holes 15" in an enlargement.

Figures 13A, 13B further indicate a further optimization, still by means of FEM analysis and subsequent tests by the Applicant, which provides a particular shape of the narrow section of the uprights at which the extensometers 13 are applied on the inner surfaces of the holes 15.

This shape provides for further excavating the trapezoidal section at the inclined sides 31" of the trapezoidal section itself and for obtaining a narrow section of the symmetric plate upright with two different thicknesses, the greater thickness 32" at the internal cavity of the spacer 1" with a rectangular section outer central protrusion in which the hole is obtained for the application of the extensometers 13.

With this shape, the optimization of the longitudinal stresses and the best deformability at the drilling in the narrow section are achieved, thus avoiding the shear stresses and side contraction effects deriving from the trapezoidal section.

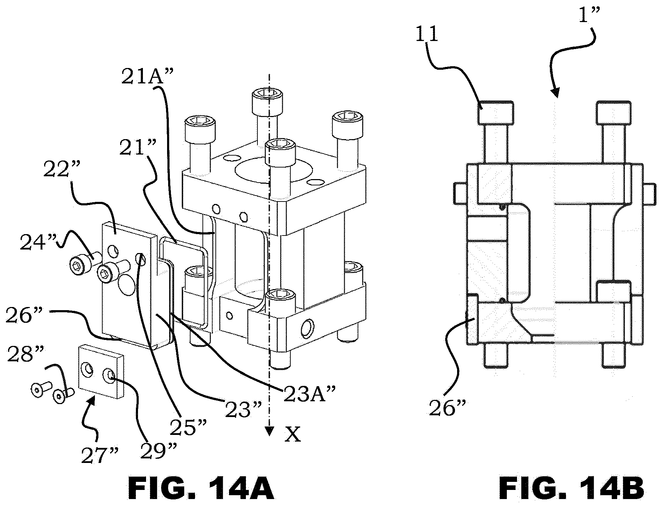

Figures 14A and 14B further show how the closing flanges19", or caps, are constrained to only one part of the spacer. Specifically, said closing flanges 19" have a perimetral gasket 21" adapted to be inserted into the corresponding perimetral slot 21A" and to be in direct contact with the walls of the window of the spacer 1", and a plate-like body 23" having a rectangular shape with connected angles and with sides of such dimensions as to maintain a clearance of at least 5 hundredths of a mm or more when inserted into the corresponding rectangular window of the spacer.

Said plate-like body 22" has an integrally obtained fixing plate 23" of lesser thickness, protruding from the plate-like body 22" and having a slot 23A" for the gasket 21".

The whole thing is fixed by means of two screws 24" passing through holes in the protruding plate portion of lesser thickness and screwed in two corresponding holes 25" obtained on the body of the upper flange 9 of the spacer 1".

Furthermore, the plate-shaped body 22" has a recessed step portion 26" at the outer lower edge, opposite the contact surface with the gasket 21".

Onto said recessed portion 26" a second flange 27" of lesser dimensions abuts, which has a pair of second through-holes 29" that house two second screws 28" which fix said second flange to the body of the lower flange 8 of the spacer 1".

The present solution allows fixing tight closing flanges 19" without the fixing thereof developing and transmitting an unwanted axial load between the flange 9 and the flange 8 of the spacer.

The present invention further relates to an apparatus for reaction molding by casting or injection (not shown) comprising at least one head 100 and at least one mold.

However, it is noted that the spacer 1, 1', 1" described in the above embodiments and defined in the enclosed claims, finds its application not only in the head 100 and in the above apparatus further comprising a mold.

In fact, said spacer may be coupled indifferently to various types of mixing heads, independently, for instance, of the conformation of the dispensing duct, or chamber, of the related tube or of other components.

Still more specifically, for instance, the spacer 1, 1', 1" comprises deformation sensors as claimed, operates in transferring the sliding force that develops between the surface of the dispensing duct, or chamber, and the self-cleaning stem, no matter this dispensing chamber is composed, both with the entire tube illustrated here, and with the tube made in multiple components or even without the tube, defined as a separate component.

Advantageously, the present invention has a component adapted to detect the forces acting on the self-cleaning organs of a mixing head in a precise and reliable manner, so as to determine its operation and extrapolate whether or not the imposed optimal operating conditions are satisfied.

Still advantageously, the present invention allows determining the need for maintenance or flushing or further self-cleaning movement.

Still advantageously, the present invention includes a sensorized spacer that can be coupled and decoupled from a mixing and dosing head so that it can be replaced and easily maintained.

More advantageously, this allows carrying out a correct cleaning of the spacer in which the accumulation of reacted resin residues occurs which could affect the overall operation. Advantageously, the fact that these residues accumulate more in a single component and the fact that this component is sensorized and disassemblable ensure optimal cleaning and functioning in the long term.

Still advantageously, the processing variations at the production level of the entire mixing head are small and therefore it is possible to introduce the present solution within pre-existing production cycles.

Still advantageously, the components adopted in the present invention are not individually complex and do not involve high costs.

Advantageously, the apparatus according to the invention comprising a high pressure mixing head with the spacer described above provides a high and constant quality product and production over time.

Finally, advantageously, the present solution provides for a simple operation that can be easily understood by the appointed operators and a facilitated maintenance of the spacer and related sensors.

It will be clear for the person skilled in the art that changes and variants can be made to the present invention, all of them falling within the scope of the invention defined by the appended claims.

For instance, further research developments, in particular relating to the uprights section of the spacer, may lead to improved solutions, however included in the scope of protection defined by said claims.

## Claims

1. Spacer (1, 1', 1") for high pressure mixing head (100) comprising:
- a control cylinder flange (8);
- a head body flange (9); and
- a plurality of uprights (10, 10', 10") adapted to interconnect said control cylinder flange (8) and said head body flange (9),
at least one of said plurality of uprights (10, 10', 10") comprising at least one deformation detection sensor (13, 13', 13") applied at at least one available deformation surface thereof and adapted to detect longitudinal deformations and/or transversal deformations of said at least one of said plurality of uprights (10, 10', 10"),
**characterised in that**
said at least one available deformation surface of said at least one of said plurality of uprights (10, 10', 10") comprises at least one cavity in which said at least one deformation detection sensor (13, 13', 13") is applied.

2. Spacer (1, 1', 1") according to claim 1, wherein said at least one cavity is made of at least one longitudinal hole (15, 15', 15") according to a longitudinal axis (X) of said at least one of said plurality of uprights (10, 10', 10") in which said at least one deformation detection sensor (13, 13', 13") is applied.

3. Spacer (1, 1', 1") according to claim 2, wherein said at least one cavity is made of two holes (15, 15', 15") that are symmetric with respect to a longitudinal transversal section according to the axis (X) of said at least one of said plurality of uprights (10, 10', 10") in which said at least one deformation detection sensor (13, 13', 13") is applied.

4. Spacer (1, 1', 1") according to claim 1, wherein said available deformation surfaces comprise outer surfaces (14, 14', 14") of said uprights (10).

5. Spacer (1, 1', 1") according to any one of claims 1 to 4, wherein said at least one deformation detection sensor (13, 13', 13") comprises at least one extensometer (13, 13', 13").

6. Spacer (1, 1', 1") according to claim 5, wherein said at least one extensometer (13, 13', 13") is applied in longitudinal direction and/or transversal direction with respect to a longitudinal central axis (X) of said at least one of said plurality of uprights (10, 10', 10").

7. Spacer (1, 1', 1") according to one of claims 1 to 6, comprising two uprights (10, 10', 10") or three uprights (10, 10', 10") or four uprights (10, 10', 10"), or six uprights (10, 10', 10").

8. Spacer (1, 1', 1") according to claim 7, wherein said uprights (10, 10', 10") are arranged symmetrically with respect to a longitudinal central axis (X) of said at least one of said plurality of uprights (10, 10', 10").

9. Spacer (1, 1', 1") according to one of claims 1 to 5, wherein said plurality of uprights (10, 10', 10") comprise fillet end portions (10B, 10B', 10B") at said control cylinder flange (8) and at said head body flange (9).

10. Spacer (1, 1', 1") according to one of claims 1 to 9, wherein said at least one cavity is filled in with a hardening resin.

11. Spacer (1, 1', 1") according to one of claims 1 to 10, further comprising at least one duct departing from said at least one cavity, said at least one duct being adapted to contain at least one connection and power supply wire of said at least one deformation detection sensor (13, 13', 13"), said at least one duct being preferably filled in with a hardening resin.

12. Spacer (1") according to any one of claims 1 to 11, further comprising thin sheets (16"), having thickness comprised between 1 mm and 6 mm, preferably between 2 mm and 5 mm, at inner surfaces of said plurality of uprights (10").

13. Spacer (1") according to claim 12, wherein said thin sheets comprise windows (17") made with shaped raised edges (18").

14. Spacer (1, 1', 1") according to any one of claims 1 to 13, wherein said control cylinder flange (8) and said head body flange (9) are spaced by a distance L and said at least one available deformation surface is provided within a region delimited by two axes each 2/5L away from a transverse centerline of said spacer (1, 1', 1") in opposite directions.

15. Spacer (1, 1', 1") according to any one of claims 1 to 14, further comprising fixing holes (11A) adapted to receive fixing screws (11) at peripheral portions for each of said control cylinder flange (8) and said head body flange (9) in order to removably couple said spacer (1, 1', 1") to said head (100).

16. High pressure mixing head (100) for injection or casting reaction molding, of the type comprising:
- a head body (2),
- a mixing chamber (4), obtained in the head body (2) and in fluid communication with a supply duct (3), at least partially defined by a supply tube (3A) or by a joint of a hole in said head body (2);
- a self-cleaning stem (6) sliding in said supply duct (3), said self-cleaning stem (6) being activated by a control device (7), and
- a spacer (1, 1', 1") according to any one of claims 1 to 15, wherein said control cylinder flange (8) is connectable to said control device (7) of said self-cleaning stem (6) and said head body flange (9) is connectable to said head body (2).

17. Apparatus for injection or casting reaction molding comprising at least one high pressure mixing head (100) according to claim 16 and at least one mould.

## Patentansprüche

1. Abstandhalter (1, 1', 1") für einen Hochdruck-Mischkopf (100), umfassend:
- einen Steuerzylinderflansch (8);
- einen Kopfkörperflansch (9); und
- eine Vielzahl von Stützstreben (10, 10', 10"), die dazu ausgelegt sind, den Steuerzylinderflansch (8) und den Kopfkörperflansch (9) miteinander zu verbinden, wobei mindestens einer der mehreren Stützstreben (10, 10', 10") mindestens einen Verformungssensor (13, 13', 13"), der an mindestens einer verfügbaren Verformungsfläche desselben angebracht ist und dazu ausgelegt ist, Längsverformungen und/oder Querverformungen des mindestens einen der mehreren Stützen (10, 10', 10") zu erfassen, **dadurch gekennzeichnet, dass** die mindestens eine verfügbare Verformungsfläche des mindestens eines der mehreren Stützen (10, 10', 10") mindestens einen Hohlraum, in dem wobei mindestens ein Verformungserkennungssensor (13, 13', 13") vorgesehen ist.

2. Abstandhalter (1, 1', 1") nach Anspruch 1, wobei der mindestens eine Hohlraum aus mindestens einem Längsloch (15, 15', 15") entlang einer Längsachse (X) des mindestens einen der mehreren Stützen (10, 10', 10") besteht, in dem der mindestens eine Verformungssensor (13, 13', 13") angebracht ist.

3. Abstandshalter (1, 1', 1") nach Anspruch 2, wobei der mindestens eine Hohlraum aus zwei Löchern (15, 15', 15") besteht, die symmetrisch zu einem Längsquerschnitt entlang der Achse (X) des mindestens einen der mehreren Ständer (10, 10', 10") symmetrisch angeordnet sind, in dem der mindestens eine Verformungssensor (13, 13', 13") angebracht ist.

4. Abstandshalter (1, 1', 1") nach Anspruch 1, wobei die verfügbaren Verformungsflächen die Außenflächen (14, 14', 14") der Stützen (10) umfassen.

5. Abstandshalter (1, 1', 1") nach einem der Ansprüche 1 bis 4, wobei der mindestens eine Verformungserfassungssensor (13, 13', 13") mindestens einen Dehnungsmesser (13, 13', 13") umfasst.

6. Abstandhalter (1, 1', 1") nach Anspruch 5, wobei der mindestens eine Dehnungsmesser (13, 13', 13") in Längsrichtung und/oder Querrichtung in Bezug auf eine Längsmittelachse (X) des mindestens einen der mehreren Ständer (10, 10', 10") angeordnet ist.

7. Abstandhalter (1, 1', 1") nach einem der Ansprüche 1 bis 6, umfassend zwei Stützen (10, 10', 10") oder drei Stützen (10, 10', 10") oder vier Stützen (10, 10', 10") oder sechs Stützen (10, 10', 10").

8. Abstandhalter (1, 1', 1") nach Anspruch 7, wobei die Stützen (10, 10', 10") symmetrisch zu einer Längsmittelachse (X) der mindestens einen der mehreren Stützen (10, 10', 10") angeordnet sind.

9. Abstandshalter (1, 1', 1") nach einem der Ansprüche 1 bis 5, wobei die mehreren Stützen (10, 10', 10") am Steuerzylinderflansch (8) und am Kopfkörperflansch (9) abgerundete Endabschnitte (10B, 10B', 10B") aufweisen.

10. Distanzstück (1, 1', 1") nach einem der Ansprüche 1 bis 9, wobei der mindestens eine Hohlraum mit einem aushärtenden Harz ausgefüllt ist.

11. Abstandhalter (1, 1', 1") gemäß einem der Ansprüche 1 bis 10, der ferner mindestens einen von dem mindestens einen Hohlraum ausgehenden Kanal umfasst, wobei der mindestens eine Kanal dazu ausgelegt ist, mindestens ein Anschluss- und ein Stromversorgungskabel des mindestens einen Verformungssensors (13, 13', 13") aufzunehmen, und wobei der mindestens eine Kanal vorzugsweise mit einem aushärtenden Harz verfüllt ist.

12. Abstandshalter (1") gemäß einem der Ansprüche 1 bis 11, der ferner dünne Platten (16") mit einer Dicke zwischen 1 mm und 6 mm, vorzugsweise zwischen 2 mm und 5 mm, an den Innenflächen der mehreren Stützen (10") umfasst.

13. Abstandhalter (1") nach Anspruch 12, wobei die dünnen Platten Fenster (17") mit geformten, erhöhten Rändern (18") aufweisen.

14. Abstandshalter (1, 1', 1") gemäß einem der Ansprüche 1 bis 13, wobei der Steuerzylinderflansch (8) und der Kopfkörperflansch (9) einen Abstand L voneinander aufweisen und bei dem n mindestens eine verfügbare Verformungsfläche innerhalb eines Bereichs vorgesehen ist, der durch zwei Achsen begrenzt ist, die jeweils 2/5L von einer Quermittellinie des Abstandshalters (1, 1', 1") in entgegengesetzte Richtungen beabstandet sind.

15. Abstandshalter (1, 1', 1") gemäß einem der Ansprüche 1 bis 14, der ferner Befestigungslöcher (11A) umfasst, die dazu ausgelegt sind, Befestigungsschrauben (11) an Umfangsabschnitten sowohl des Steuerzylinderflansches (8) als auch des Kopfkörperflansches (9) aufzunehmen, um den Abstandshalter (1, 1', 1") lösbar mit dem Kopf (100) zu verbinden.

16. Hochdruck-Mischkopf (100) für das Spritzgießen oder das Reaktionsgießen, der Folgendes umfasst:
- einen Kopfkörper (2),
- eine Mischkammer (4), die im Kopfkörper (2) ausgebildet ist und in Fluidverbindung mit einem Zuführkanal (3) steht, der zumindest teilweise durch ein Zuführrohr (3A) oder durch eine Öffnung im Kopfkörper (2) gebildet wird;
- einen selbstreinigenden Schaft (6), der in dem Zuführkanal (3) gleitet, wobei der selbstreinigende Schaft (6) durch eine Steuervorrichtung (7) betätigt wird, und
- ein Abstandhalter (1, 1', 1") gemäß einem der Ansprüche 1 bis 15, wobei der Steuerzylinderflansch (8) mit der Steuervorrichtung (7) des selbstreinigenden Schafts (6) und der Kopfkörperflansch (9) mit dem Kopfkörper (2) verbindbar ist.

17. Vorrichtung zum Spritzgießen oder Gießreaktionsformen, umfassend mindestens einen Hochdruck-Mischkopf (100) gemäß Anspruch 16 und mindestens eine Form.

## Revendications

1. Dispositif d'espacement (1, 1', 1") pour une tête de mélange haute pression (100) comprenant :
une bride de cylindre de commande (8) ;
une bride de corps de tête (9) ; et
une pluralité de montants (10, 10', 10") adaptés pour interconnecter ladite bride de cylindre de commande (8) et ladite bride de corps de tête (9),
au moins un montant de ladite pluralité de montants (10, 10', 10'') comprenant au moins un capteur de détection de déformation (13, 13', 13") appliqué sur au moins l'une de leurs surfaces de déformation disponibles et adapté pour détecter des déformations longitudinales et/ou des déformations transversales dudit au moins un montant de ladite pluralité de montants (10, 10', 10"),
**caractérisé en ce que** :
ladite au moins une surface de déformation disponible dudit au moins un montant de ladite pluralité de montants (10, 10', 10'') comprend au moins une cavité dans laquelle ledit au moins un capteur de détection de déformation (13, 13', 13") est appliqué.

2. Dispositif d'espacement (1, 1', 1'') selon la revendication 1, dans lequel ladite au moins une cavité est réalisée avec au moins un trou longitudinal (15, 15', 15") selon un axe longitudinal (X) dudit au moins un montant de ladite pluralité de montants (10, 10', 10'') dans lequel ledit au moins un capteur de détection de déformation (13, 13', 13") est appliqué.

3. Dispositif d'espacement (1, 1', 1'') selon la revendication 2, dans lequel ladite au moins une cavité est réalisée avec deux trous (15, 15', 15") qui sont symétriques par rapport à une section transversale longitudinale selon l'axe (X) dudit au moins un montant de ladite pluralité de montants (10, 10', 10'') dans laquelle ledit au moins un capteur de détection de déformation (13, 13', 13") est appliqué.

4. Dispositif d'espacement (1, 1', 1'') selon la revendication 1, dans lequel lesdites surfaces de déformation disponibles comprennent des surfaces externes (14, 14', 14") desdits montants (10).

5. Dispositif d'espacement (1, 1', 1'') selon l'une quelconque des revendications 1 à 4, dans lequel ledit au moins un capteur de détection de déformation (13, 13', 13") comprend au moins un extensomètre (13, 13', 13").

6. Dispositif d'espacement (1, 1', 1'') selon la revendication 5, dans lequel ledit au moins un extensomètre (13, 13', 13") est appliqué dans la direction longitudinale et/ou dans la direction transversale par rapport à un axe central longitudinal (X) dudit au moins un montant de ladite pluralité de montants (10, 10', 10").

7. Dispositif d'espacement (1, 1', 1'') selon l'une des revendications 1 à 6, comprenant deux montants (10, 10', 10'') ou trois montants (10, 10', 10'') ou quatre montants (10, 10', 10'') ou six montants (10, 10', 10").

8. Dispositif d'espacement (1, 1', 1'') selon la revendication 7, dans lequel lesdits montants (10, 10', 10'') sont agencés de manière symétrique par rapport à un axe central longitudinal (X) dudit au moins un montant de ladite pluralité de montants (10, 10', 10").

9. Dispositif d'espacement (1, 1', 1'') selon l'une des revendications 1 à 5, dans lequel ladite pluralité de montants (10, 10', 10'') comprend des parties d'extrémité de congé (10B, 10B', 10B") au niveau de ladite bride de cylindre de commande (8) et au niveau de ladite bride de corps de tête (9).

10. Dispositif d'espacement (1, 1', 1'') selon l'une des revendications 1 à 9, dans lequel ladite au moins une cavité est remplie avec une résine de durcissement.

11. Dispositif d'espacement (1, 1', 1'') selon l'une des revendications 1 à 10, comprenant en outre au moins un conduit s'écartant de ladite une cavité, ledit au moins un conduit étant adapté pour contenir au moins un fil de raccordement et d'alimentation d'énergie dudit au moins un capteur de détection de déformation (13, 13', 13"), ledit au moins un conduit étant de préférence rempli avec une résine de durcissement.

12. Dispositif d'espacement (1") selon l'une quelconque des revendications 1 à 11, comprenant en outre des feuilles fines (16"), ayant une épaisseur comprise entre 1 mm et 6 mm, de préférence entre 2 mm et 5 mm, au niveau des surfaces internes de ladite pluralité de montants (10").

13. Dispositif d'espacement (1") selon la revendication 12, dans lequel lesdites feuilles fines comprennent des fenêtres (17") réalisées avec des bords surélevés façonnés (18").

14. Dispositif d'espacement (1, 1', 1'') selon l'une quelconque des revendications 1 à 13, dans lequel ladite bride de cylindre de commande (8) et ladite bride de corps de tête (9) sont espacées par une distance L et ladite au moins une surface de déformation disponible est prévue dans une région délimitée par deux axes chacun 2/5L à l'opposé d'une ligne centrale transversale dudit dispositif d'espacement (1, 1', 1'') dans des directions opposées.

15. Dispositif d'espacement (1, 1', 1'') selon l'une quelconque des revendications 1 à 14, comprenant en outre des trous de fixation (11A) adaptés pour recevoir des vis de fixation (11) au niveau des parties périphériques pour chacune parmi ladite bride de cylindre de commande (8) et ladite bride de corps de tête (9) afin de coupler, de manière amovible, ledit dispositif d'espacement (1, 1', 1'') à ladite tête (100).

16. Tête de mélange haute pression (100) pour moulage par injection ou par réaction de coulée, du type comprenant :
un corps de tête (2),
une chambre de mélange (4) obtenue dans le corps de tête (2) et en communication de fluide avec un conduit d'alimentation (3), au moins partiellement définie par un tube d'alimentation (3A) ou par un joint d'un trou dans ledit corps de tête (2) ;
une tige autonettoyante (6) coulissant dans ledit conduit d'alimentation (3), ladite tige autonettoyante (6) étant activée par un dispositif de commande (7), et
un dispositif d'espacement (1, 1', 1'') selon l'une quelconque des revendications 1 à 15, dans laquelle ladite bride de cylindre de commande (8) peut être raccordée audit dispositif de commande (7) de ladite tige autonettoyante (6) et ladite bride de corps de tête (9) peut être raccordée audit corps de tête (2).

17. Appareil pour moulage par injection ou par réaction de coulée comprenant au moins une tête de mélange haute pression (100) selon la revendication 16 et au moins un moule.
